# EUROPÄISCHE PATENTSCHRIFT

(11) **EP 2 119 932 B1**
(45) Veröffentlichungstag und Bekanntmachung des Hinweises auf die Patenterteilung: **28.09.2011**
(21) Anmeldenummer: 08008411.4
(22) Anmeldetag: 05.05.2008
(51) Int. Cl.: F16D 15/00, F16D 7/10

(54) **Spannvorrichtung zur Drehmomentübertrragung zwischen einer angetriebenen Welle und einer die Welle koaxial umgebenden, zylindrischen Hülse**
Clamping device for torque transmission between a powered shaft and a cylindrical casing coaxially surrounding the shaft
Dispositif de serrage destiné à la transmission du couple moteur entre un arbre entraîné et une enveloppe cylindrique enveloppant l'arbre coaxialement

(43) Veröffentlichungstag der Anmeldung: 18.11.2009
(73) Patentinhaber: JURMET Sp. Z.o.o., 87-162 Lubicz k. Torunia (PL)
(72) Erfinder: Kwiatkowski, Jerzy, 87-162 Lubicz Dolny (PL)
(74) Vertreter: Hoffmeister, Helmut

(56) Entgegenhaltungen:
- DE-A1- 1 625 670
- DE-A1- 19 903 863
- DE-U- 7 315 306
- US-A1- 2006 124 331

## Beschreibung

Die Erfindung betrifft eine Spannvorrichtung zur Drehmomentübertragung zwischen einer angetriebenen Welle und einer die Welle koaxial umgebenden und auf die Welle abnehmbar aufgeschobenen, zylindrischen Hülse, mit einem Außenring, an dessen Umfang mehrere im Abstand verteilten Ausnehmungen zur Aufnahme von Klemmkörpern angeordnet sind, einem Innenring, an dem sich die Klemmkörper abstützen, und einem Federelement.

Eine Spannvorrichtung der eingangs genannten Art, als Klemmkörperkupplung bezeichnet, ist aus DE 41 03 136 A1 bekannt. Die im Käfig befindlichen Klemmkörper können u. a. als Klemmkugel ausgebildet sein. Ferner sind aus DE 123 73 98 Wickelhülsen-Tragkörper bekannt, die sich jeweils aus einem Außenring mit Ausnehmungen, einem Innenring und radial beweglichen Spannstücken und Federelementen zusammensetzen. Die Spannstücken sind jeweils mit einem sich am Innenring abstützenden Rollen- oder Kugelelement bestückt. Aus DE 42 02 152 A1 ist eine Klemmrollenkupplung bekannt, an deren Käfig Ausnehmungen mit darin untergebrachten Klemmrollen angeordnet sind. In DE 12 54 917 sind Klemmkörperkupplungen für Wickelmaschinen offenbart, die ein Kuppeln und Lösen der Welle mit einer auf die Welle geschobenen Wickelhülse bewirken. Aus DE 35 19 380 A1 ist eine Spannvorrichtung für Wickelhülsen bekannt, bei der die Wickelwelle als Vollwelle ausgebildet ist und radial bewegliche Klemmstücke aufweist.

Spannvorrichtungen derartiger Art sind hauptsächlich für die Wickelwellen der Rollenschneid- und Wickelmaschinen von Bobine-Typ gedacht. Die Spannvorrichtungen bzw. Klemmkörperkupplungen finden eine breite Verwendung überall dort, wo die Materialbahnen in Streifen geschnitten und anschließend auf Wickelhülsen aufgewickelt werden, überwiegend in der Verpackungsindustrie, bei der Folien- und Papierherstellung und in den Druckereien.

Eine gattungsgemäße Spannvorrichtung ist aus DE-U-7315306 bekannt.

Nachteilig bei den bekannten Spannvorrichtungen ist, dass in die Räume zwischen den Innen- und Außenringen bzw. zwischen dem Ring und der Wickelwelle Verunreinigungen gelangen, die vom Pappmaterial der Wickelhülse stammen. Infolgedessen muss die Kupplung öfter zerlegt werden. Da auf eine Wickelmaschine mehrere Kupplungen anfallen, ist der Zeitaufwand für die Instandsetzung groß.

Es stellt sich demnach die Aufgabe, eine Spannvorrichtung zur Drehmomentübertragung zwischen einer angetriebenen Welle und einer die Welle koaxial umgebenden und auf die Welle abnehmbar aufgeschobenen, zylindrischen Hülse, insbesondere Wickelhülse einer Wickelmaschine zu konzipieren, bei der die von der Wickelhülse stammenden Materialpartikeln einen stark begrenzten Zugang ins Innere der Spannvorrichtung haben.

Diese Aufgabe wird bei einer gattungsgemäßen Spannvorrichtung gelöst, bei der
- der Klemmkörper eine Kugel von einem Radius (r) ist,
- die Ausnehmungen des Außenringes jeweils eine sphärische Innenfläche aufweisen, deren Innenradius (R2) gleich dem Radius (r) des Klemmkörpers ist oder den Radius (r) geringfügig überschreitet, so dass zwischen der sphärischen Innenfläche des Außenringes und der kugelförmigen Oberfläche des Klemmkörpers ein Spiel verbleibt,
- der Außenring eine Dicke (d) aufweist, die kleiner als der Radius (r) der Kugel ist,
- und dass das Spiel zwischen Klemmkörper und Innenfläche in einer klemmenden Endposition des Klemmkörpers sich wenigstens ein einem Kontaktbereich zwischen Klemmkörper und Innenfläche sich dem Nullwert nähert, so dass ein staubundurchlässiger Abschluss zwischen Klemmkörper und Innenfläche erzeugt ist.

Vorzugsweise variiert der Innenradius (R2) der sphärischen Innenfläche über die Höhe der Ausnehmung, sodass in jeder möglichen Klemmposition eine Abdichtung im genannten Sinn erreicht wird.

Die Spannvorrichtung ermöglicht die Drehmomentübertragung in einer Drehrichtung und ein Entspannen der Wickelhülse in anderer Drehrichtung.

Unter dem Begriff "sphärisch" soll eine kalottenförmige, an eine Kugelkappe angenäherte Oberflächenform verstanden werden.

Dadurch, dass der Radius des Klemmkörpers gleich bzw. nahezu gleich dem Radius des sphärischen Innenfläche des Außenringes ist, lässt sich das Spiel praktisch zum Null reduzieren. Dabei kann die maximale Reduzierung des Spiels erst durch Einhaltung einer Bedingung erzielt werden, die besagt, dass die Dicke des Außenringes kleiner als der Radius des Klemmkörpers ist. Soll die Bedingung nicht erfüllt werden, kommt kein sphärisches Spiel und kein stabiler Sitz des Klemmkörpers in der Ausnehmung zustande.

Im Weiteren werden die Begriffe "Klemmkörper" durch "Klemmkugel" und "Spannvorrichtung" durch "Klemmkörperkupplung" ersetzt.

Von großem Vorteil ist, dass bei der klemmenden Endposition der Klemmkugeln praktisch keine Schnipsel und größere Partikeln von weichem Pappmaterial der Wickelhülse in die das Spiel bildenden, ebenfalls sphärischen Zwischenräume gelangen. Dies ermöglicht wiederum eine erhebliche Verkürzung der Störungs- bzw. Stillstandzeiten der Wickelmaschine.

Um eine Unwucht zu vermeiden, eine gleichmäßige Andruckskraft zu erzeugen und eine Stabilität der Klemmkörperkupplung zu gewährleisten, kann eine Anordnung der Klemmkugeln gewählt werden, bei der die Klemmkugeln in wenigstens einer, vorzugsweise in zwei senkrecht zu einer Wellenachse liegenden, voneinander beabstandeten Ebenen angeordnet sind, wobei die in einer Ebene liegenden Klemmkugeln gegenüber den in zweiter Ebene liegenden Klemmkugeln versetzt angeordnet sind. Vorteilhaft ist es auch, wenn ein Abstand zwischen den in beiden Ebenen liegenden Klemmkugeln eingehalten wird, der größer als Durchmesser der Klemmkugel ist. Dies ermöglicht wiederum eine größere Stabilität der an der Wickelwelle aufgesetzten Klemmkörperkupplung und schließlich der aufgesteckten Wickelhülse.

Ein Ausrücken der Klemmkugel aus der klemmenden Endposition kann gegen die Federkraft erfolgen, die durch ein fest mit dem Innenring verbundenes Federelement erzeugt werden kann. Als Federelement kann beispielsweise eine am Innenring angeschraubte, metallene, streifenförmige Blattfeder sein, an derer einem Ende eine Öffnung zur Aufnahme einer Befestigungsschraube angeordnet ist. Die nicht vorgespannte Blattfeder kann, wohlgemerkt vor ihrer Befestigung, gerade und eben sein.

Der mit den Klemmkugeln bestückte Außenring bildet also einen Käfig, mit dem die Klemmkugeln in Umfangrichtung derart geführt sind, dass sich im wesentlichen ständig in gleicher Position zum jeweiligen Klemmspalt befinden. Dabei sind die Klemmkugeln durch die sich in den Klemmspalten befindliche Federelemente gegen eine Innenfläche der auf den Außenring aufgesteckten, aus Kunststoff oder Pappmaterial gefertigten Wickelhülse gedrückt.

Schließlich bezieht sich die Erfindung auch auf ein Ensemble, bestehend aus einer Papp- oder Kunststoffhülse, die über die Spannvorrichtung mit der Antriebswelle bzw. Wickelwelle gekoppelt ist.

Ein Ausführungsbeispiel der Erfindung ist anhand der Zeichnung näher erläutert. Die Figuren zeigen:
- Fig. 1: die Spannvorrichtung in einer Seitenansicht auf ihren zylindrischen Mantel;
- Fig. 2: Ausschnitt des Außenringes mit angedeuteter sphärischen Innenfläche, in einer perspektivi- schen Ansicht;
- Fig. 3: einen Schnitt A-A gemäß Fig. 1;
- Fig. 4: ein vergrößertes Detail "Z" gemäß Fig. 3;
- Fig. 5: einen Schnitt B-B gemäß Fig. 2 durch die Aus- nehmung;
- Fig. 6: Umrisse der Öffnungskanten der Ausnehmung in einer Projektion auf eine senkrecht zur Öff- nungsachse liegende Ebene;
- Figuren 7 und 8: Anordnung der Klemmkugeln in der in Fig. 5 ge- zeigten Ausnehmung.

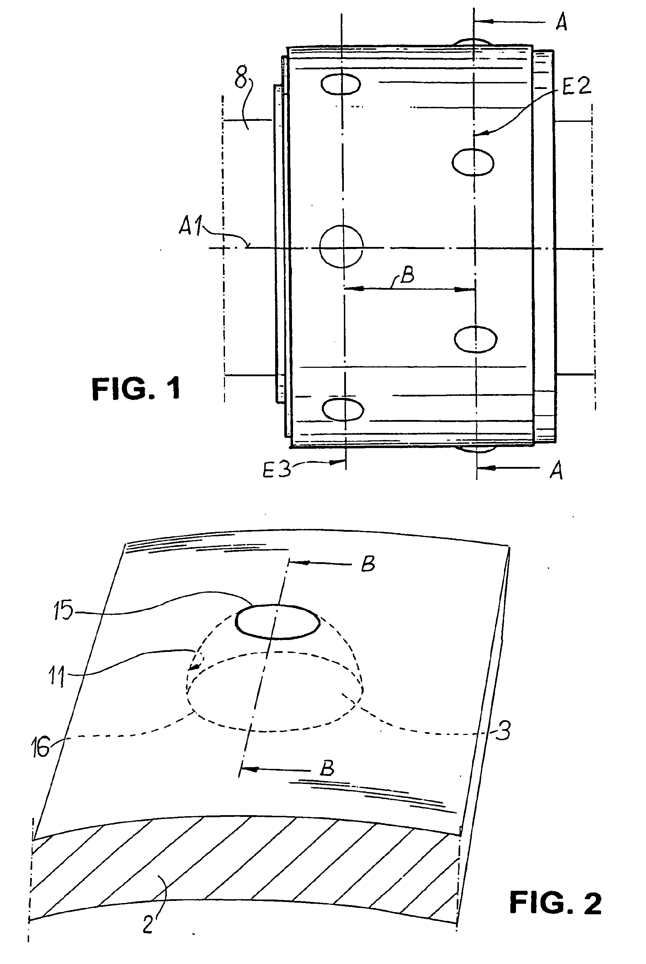

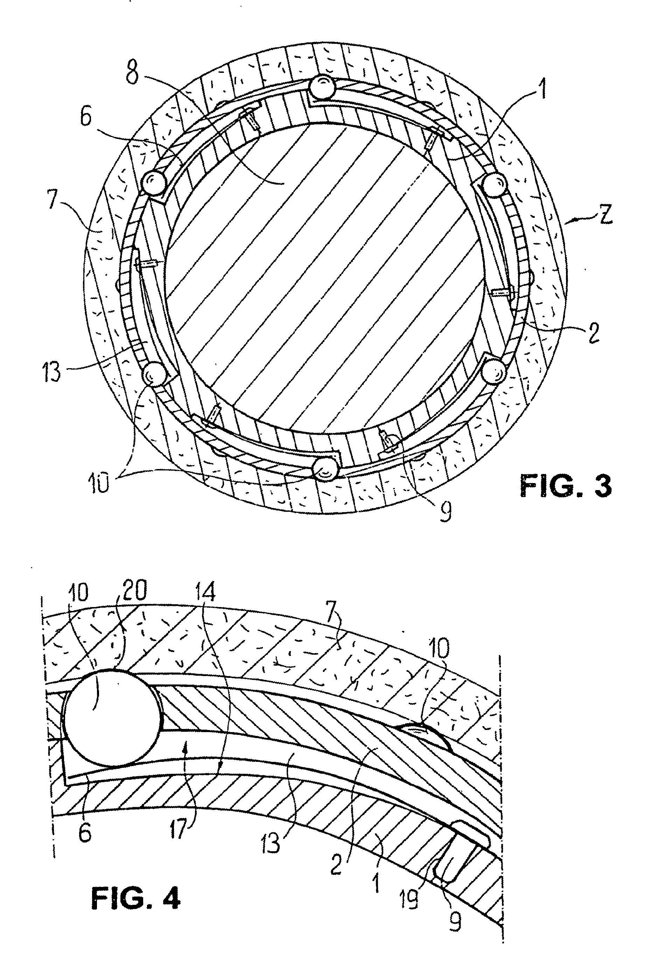

Eine in Figuren 1 und 3 gezeigte Spannvorrichtung 100 (Klemmkörperkupplung) setzt sich aus einem Außenring 2, einem Innenring 1, mehreren Klemmkugeln 10 und Federelementen 6 zusammen. Die Klemmkörperkupplung ist auf eine Wickelwelle 8 einer nicht dargestellten Bobine aufgesetzt. Normalerweise werden mehrere Klemmkörperkupplungen auf die Wickelwelle aufgesteckt.

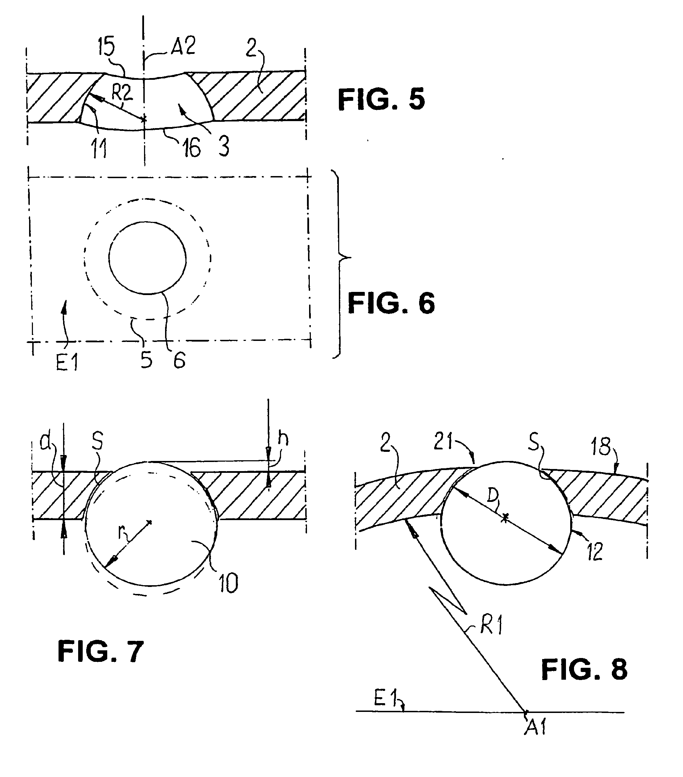

Die Klemmkugeln 10 sitzen jeweils in einer Ausnehmung 3 des Außenringes, die detailliert in Figuren 2 und 5 dargestellt ist. Die Wickelwelle 8 ist auf bekannte Art und Weise, die z. B. in der vorgenannten Schrift DE 35 19 380 A1 ausführlich beschrieben ist, an den Innenring 1 angepasst.

Der Außenring 2 führt die Klemmkugeln 10 in Umfangrichtung (vgl. Figuren 3 und 4), und zwar jeweils entlang eines sich bogenartig verjüngenden Klemmspaltes 13, der von einer Innenfläche 17 des Außenringes 2 und eine am Innenring 1 angeordnete Lauffläche 14 zur Abrollbewegung der Klemmkugeln 10 begrenzt ist. Obwohl sich die Klemmkugeln 10 drehen können, ist ihre Bewegungsfreiheit gegenüber dem Außenring 2 zur radialen Richtung begrenzt. Dies zeigen die Figuren 4 und 7. Die Klemmkugeln 10 sind jeweils durch ein Federelement, hier: metallene Blattfeder 6 gegen den Außenring 2 gedrückt. Die Blattfeder ist am engeren Ende des Klemmspaltes 13 mit dem Innenring 1 über ein Befestigungsmittel 9 fest verbunden. Als Befestigungsmittel 9 kommt ein Kopfniet zum Einsatz, der in eine Öffnung 19 am Innenring eingeschlagen ist.

Die Ausnehmung 3 weist eine Öffnungsachse A2 (vgl. Fig. 5)
und eine im Stahlmaterial des Außenringes 2 gefräste, sphärische Innenfläche 11 von einem Radius R2 auf, die durch zwei Öffnungskanten 15, 16 begrenzt ist und einem Kugelabschnitt ähnelt, dessen Höhe, bemessen längs der Öffnungsachse A2, durch eine Dicke d des Außenringes 2 definiert ist. Gemäß Fig. 6 ergeben die in Fig. 5 gezeigten Öffnungskanten 15, 16 in Projektion auf eine senkrecht zur Öffnungsachse A liegende Ebene E1 zwei zueinander konzentrisch angeordnete, kreisförmige Umrisse 4,5.

Wie die Fig. 1 zeigt, sind die Klemmkugeln 10 in zwei senkrecht zur Wellenachse A1 verlaufenden Ebenen E2, E3 in gleichen peripheren Abständen voneinander angeordnet. Die Ebenen E2, E3 und damit die Klemmkugeln 10 liegen in einem Abstand B voneinander, der einen Durchmesser D der Klemmkugel wesentlich überschreitet. Zur besseren Lastverteilung sind die in der ersten Ebene E2 liegenden Klemmkugeln 10 gegenüber den in der zweiten Ebene E3 liegenden Klemmkörpern versetzt angeordnet. Wie aus Figuren 1 und 3 erkennbar ist, sind insgesamt zwölf Klemmkugeln 10 vorgesehen. Hierdurch ergibt sich eine genaue Auswuchtung und Kraftverteilung der Andruckkräfte gegen die Wickelhülse. Auch ist die Wickelhülse gut gegen Verschiebung in Axialrichtung als auch gegen relatives Verdrehen zur Wickelwelle gesichert.

Die Figuren 7 und 8 zeigen die Klemmkugel 10 in ihrer maximalen radialen Endposition, bei der zwischen der sphärischen Innenfläche 11 der Ausnehmung 3 und einer Oberfläche 12 der Klemmkugel 10 ein geringfügiges Spiel S gebildet ist, dessen Größe von der Oberflächenbearbeitung der Klemmkugel und der Innenfläche 11 der Ausnehmung 3 abhängig ist. Dabei kann der Radius R2 über die Dicke des Außenrings 2 auch variieren, beispielsweise zur Außenseite in stetig größer oder kleiner werden, je nach Kugeldurchmesser und Austrittshöhe.

Praktisch nähert sich das Spiel S dem Nullwert. Die Klemmkugel 10 ragt über die Öffnungskante 15 der Ausnehmung 3 und damit über eine Außenfläche 18 des Außenringes 2 um einen kleinen Betrag h hinaus, der zwischen 0,5 mm und 1,0 mm liegt. Wichtig ist, dass die Dicke d des Außenringes 2 kleiner als ein Radius r der Klemmkugel 10 ist. In vorliegendem Fall beträgt die Dicke d des Außenringes etwa 2 mm bei einem Durchmesser D = 6 mm der Klemmkugel 10. Mit Bezugszeichen R1 ist ein Innenradius des Außenringes 2 bezeichnet.

### Funktion:

Eine in den Figuren 3 und 4 gezeigte Wickelhülse 7 von einem Innenradius R1 (vgl. Fig.8) wird auf die Wickelwelle 8 aufgeschoben. Auf Grund der vorteilhaften zweireihigen Anordnung der Klemmkugeln 10 nimmt die Wickelhülse 7 noch vor ihrer endgültigen Position eine stabile Lage an, die das Wackeln der Wickelhülse stark eingrenzt. Bei Drehbewegung der im Reibschluss mit dem Innenring 1 stehenden Wickelwelle 8 werden die Klemmkugeln 10 nach außen gedrückt.

Der Betrag h vergrößert sich infolge der Abrollbewegung der Klemmkugeln 10 entlang der Laufflächen 14, wodurch die Klemmkugeln in ihrer klemmenden Endposition das pappartige Material der Wickelhülse 7 auf der Art einer bei Härteprüfung verwendeten Brinell-Kugel verformen und dort jeweils eine sphärische Mulde 20 bilden.

Die Klemmkugeln 10 dringen also etwas in die Wickelhülse 7 ein, so dass die letztere fest angespannt ist. Das Spiel S zwischen den sphärischen Flächen innerhalb der Ausnehmung verkleinert sich praktisch zum Nullwert und bildet dort eine temporäre Dichtung 21, die den Weg für die Verunreinigungen in die Freiräume zwischen dem Innenring 1 und dem Außenring 2 versperrt.

Die Wickelhülse 7 wird beispielsweise mit einer Kunststoff-Folie, einer Textilbahn, einer Metallfolie oder mit einer Papierbahn außen mehrschichtig umwickelt.

Eine Lösung der Spannvorrichtung 100 geschieht durch erneutes Verdrehen der Wickelwelle in entsprechende Gegenrichtung. Beim Entspannen kehren die Klemmkugeln 10 in ihre ursprüngliche Anfangsposition zurück.

### Bezugszeichenliste:

- 1: Innenring
- 2: Außenring
- 3: Ausnehmung
- 4: Umriss
- 5: Umriss
- 6: Federelement
- 7: Wickelhülse
- 8: Wickelwelle
- 9: Befestigungsmittel
- 10: Klemmkugel
- 11: Innenfläche
- 12: Oberfläche
- 13: Klemmspalt
- 14: Lauffläche
- 15: Öffnungskante
- 16: Öffnungskante
- 17: Innenfläche
- 18: Außenfläche
- 19: Öffnung
- 20: Mulde
- 21: Dichtung

- A1: Wellenachse
- A2: Öffnungsachse
- B: Abstand
- d: Dicke
- D: Durchmesser
- E1: Ebene
- E2, E3: Ebene
- h: Betrag
- R1: Innenradius
- R2: Radius
- r: Radius
- S: Spiel

- 100: Spannvorrichtung

## Patentansprüche

1. Spannvorrichtung (100) zur Drehmomentübertragung zwischen einer angetriebenen Welle (8) und einer die Welle koaxial umgebenden und auf die Welle abnehmbar aufgeschobenen, zylindrischen Hülse (7),mit einem Außenring (2), an dessen Umfang mehrere im Abstand verteilten Ausnehmungen (3) zur Aufnahme von Klemmkörpern (10) angeordnet sind, einem Innenring (1), an dem sich die Klemmkörper (10) abstützen, und einem Federelement (6), wobei der Klemmkörper (10) eine Kugel von einem Radius (r) ist,
**dadurch gekennzeichnet, dass**
• die Ausnehmungen (3) des Außenringes (2) jeweils eine sphärische Innenfläche (11) aufweisen, deren Innenradius (R2) gleich dem Radius (r) des Klemmkörpers (10) ist oder den Radius (r) geringfügig überschreitet, so dass zwischen der sphärischen Innenfläche (11) des Außenringes (2) und der kugelförmigen Oberfläche (12) des Klemmkörpers (10) ein Spiel (S) verbleibt,
• der Außenring (2) eine Dicke (d) aufweist, die kleiner als der Radius (r) der Kugel ist,
• und dass das Spiel (S) zwischen Klemmkörper (10) und Innenfläche (11) in einer klemmenden Endposition des Klemmkörpers (10) sich wenigstens ein einem Kontaktbereich zwischen Klemmkörper und Innenfläche sich dem Nullwert nähert, so dass ein staubundurchlässiger Abschluss zwischen Klemmkörper und Innenfläche erzeugt ist.

2. Spannvorrichtung nach Anspruch 1, **dadurch gekennzeichnet, dass** die Ausnehmungen (3) des Außenringes (2) jeweils zwei die sphärische Innenfläche (11) abgrenzende Öffnungskanten (15, 16) aufweisen, die in Projektion auf eine senkrecht zur Öffnungsachse (A2) liegende Ebene (E1) zwei zueinander konzentrisch angeordnete, kreisförmige Umrisse (4, 5) ergeben.

3. Spannvorrichtung nach Anspruch 1, **dadurch gekennzeichnet, dass** der Innenradius (R2) der sphärischen Innenfläche (11) über die Höhe der Ausnehmung (3) variiert.

4. Spannvorrichtung nach Anspruch 1, **dadurch gekennzeichnet, dass** ein Ausrücken des Klemmkörpers (10) aus der klemmenden Endposition gegen die Federkraft erfolgt.

5. Spannvorrichtung nach Anspruch 1, **dadurch gekennzeichnet, dass** die Klemmkörper (10) in wenigstens einer senkrecht zu einer Wellenachse (A1) liegenden Ebene (E2; E3) angeordnet sind und dass die Ebenen (E2; E3) einen Abstand (B) zwischen den Klemmkörpern (10) definieren, der größer als Durchmesser (D) des Klemmkörpers (10) ist.

6. Spannvorrichtung nach Anspruch 4, **dadurch gekennzeichnet, dass** die in einer Ebene (E2) liegenden Klemmkörper (10) gegenüber den in anderer Ebene (E3) liegenden Klemmkörpern (10) versetzt angeordnet sind.

7. Spannvorrichtung nach Anspruch 1, **dadurch gekennzeichnet, dass** das Federelement (6) über wenigstens ein Befestigungsmittel (9) an einer am Innenring (1) eingearbeiteten Lauffläche (14) für den Klemmkörper (10) angebracht ist.

8. Spannvorrichtung nach Anspruch 1 und 7, **dadurch gekennzeichnet, dass** das Federelement (6) eine metallene, streifenförmige Blattfeder ist, die in ihrem nicht einmontierten Zustand eben ist.

9. Spannvorrichtung nach einem der vorhergehenden Ansprüche, **dadurch gekennzeichnet, dass** es sich bei der Hülse (7) um eine Wickelhülse handelt.

10. Mit einer auf einen Antriebswelle (8) schiebbaren Papp- oder Kunststoffhülse (7) versehene und über wenigstens eine Spannvorrichtung (100) nach einem der vorhergehenden Ansprüche 1 bis 9 mit der Innenseite der Hülse gekoppelte Antriebswelle.

## Claims

1. Clamping device (100) for transmitting torque between a driven shaft (8) and a cylindrical sleeve (7) coaxially surrounding the shaft and removably pushed onto the shaft, having an outer ring (2), on the periphery of which a plurality of spaced-apart apertures (3) for receiving clamping bodies (10) are disposed, an inner ring (1) on which the clamping bodies (10) are supported, and a spring element (6), wherein the clamping body (10) is a sphere with a radius (r),
**characterised in that**
• the apertures (3) of the outer ring (2) each have a spherical inner surface (11), the inner radius (R2) of which is equal to the radius (r) of the clamping body (10) or slightly exceeds the radius (r) so that some clearance (S) remains between the spherical inner surface (11) of the outer ring (2) and the spherical surface (12) of the clamping body (10),
• the outer ring (2) has a thickness (d) which is smaller than the radius (r) of the sphere,
• and **in that** the clearance (S) between the clamping body (10) and the inner surface (11) in an clamping end position of the clamping body (10) approximates the zero value at least in a contact region between the clamping body and inner surface so that a closure between the clamping body and inner surface is produced which is impermeable to dust.

2. Clamping device as claimed in claim 1, **characterised in that** the apertures (3) of the outer ring (2) each have two opening edges (15, 16) which delimit the spherical inner surface (11) and, in projection onto a plane (E1) lying perpendicular to the opening axis (A2), produce two mutually concentric circular outlines (4, 5).

3. Clamping device as claimed in claim 1, **characterised in that** the inner radius (R2) of the spherical inner surface (11) varies over the height of the aperture (3).

4. Clamping device as claimed in claim 1, **characterised in that** disengagement of the clamping body (10) from the clamping end position takes place against spring force.

5. Clamping device as claimed in claim 1, **characterised in that** the clamping bodies (10) are disposed in at least one plane (E2; E3) lying perpendicular to a shaft axis (A1) and that the planes (E2; E3) define a distance (B) between the clamping bodies (10) which is larger than the diameter (D) of the clamping body (10).

6. Clamping device as claimed in claim 4, **characterised in that** the clamping bodies (10) lying in a plane (E2) are disposed offset with respect to the clamping bodies (10) lying in the other plane (E3).

7. Clamping device as claimed in claim 1, **characterised in that** the spring element (6) is mounted via at least one attachment means (9) on a running surface (14), which is incorporated into the inner ring (1), for the clamping body (10).

8. Clamping device as claimed in claim 1 and 7, **characterised in that** the spring element (6) is a metallic strip-like leaf spring which is planar in its non-mounted state.

9. Clamping device as claimed in any one of the preceding claims, **characterised in that** the sleeve (7) is a winding sleeve.

10. Drive shaft which is provided with a cardboard or synthetic material sleeve (7), able to be pushed onto a drive shaft (8), and which is coupled to the inner side of the sleeve via at least one clamping device (100) as claimed in any one of the preceding claims 1 to 9.

## Revendications

1. Dispositif de serrage (100) destiné à la transmission d'un couple entre un arbre entraîné (8) et une enveloppe cylindrique (7) entourant coaxialement l'arbre et enfilée sur l'arbre de façon démontable, comprenant une bague externe (2) sur la périphérie de laquelle plusieurs évidements (3) répartis à distance les uns des autres sont ménagés pour recevoir des corps de blocage (10), une bague interne (1) sur laquelle s'appuient les corps de blocage (10) et des éléments élastiques (6), chaque corps de serrage (10) étant une bille de rayon (r),
**caractérisé en ce que**
chaque évidement (3) de la bague externe (2) présente une surface interne sphérique (11) dont le rayon interne (R2) est égal au rayon (r) ,de chaque corps de blocage (10) ou dépasse légèrement le rayon (r), d'une manière telle qu'il subsiste un jeu (S) entre la surface interne sphérique (11) de chaque évidement (3) de la bague externe (2) et la surface sphérique (12) de chaque corps de blocage (10),
l'épaisseur (d) de la bague externe (2) est inférieure au rayon (r) de la bille, et
le jeu (S) entre corps de blocage (10) et surface interne (11) s'approche de la valeur nulle, au moins dans une zone de contact entre corps de blocage et surface interne, dans une position de blocage finale de chaque corps de blocage (10) d'une manière telle qu'une obturation imperméable aux poussières est créée entre corps de blocage et surface interne.

2. Dispositif de serrage selon la revendication 1, **caractérisé en ce que** chaque évidement (3) de la bague externe (2) comporte deux arêtes d'ouverture (15, 16) délimitant la surface interne sphérique (11) dont les projections sur un plan (E1) situé perpendiculairement à l'axe (A2) d'ouverture forment deux contours circulaires (4, 5) disposés de façon concentrique l'un avec l'autre.

3. Dispositif de serrage selon la revendication 1, **caractérisé en ce que** le rayon interne (R2) de la surface interne sphérique (11) varie sur la hauteur de l'évidement (3).

4. Dispositif de serrage selon la revendication 1, **caractérisé en ce qu'**un débrayage de chaque corps de blocage (10) hors de la position finale de blocage s'effectue en opposition à la force élastique.

5. Dispositif de serrage selon la revendication 1, **caractérisé en ce que** les corps de blocage (10) sont disposés dans au moins un plan (E2; E3) perpendiculaire à l'axe (A1) d'arbre et **en ce que** les plans (E2; E3) définissent entre eux une distance (B) qui est supérieure au diamètre (D) de chaque corps de blocage (10).

6. Dispositif de serrage selon la revendication 5, **caractérisé en ce que** les corps de blocage (10) situés dans le plan (E2) sont décalés par rapport aux corps de blocage (10) situés dans le plan (E3).

7. Dispositif de serrage selon la revendication 1, **caractérisé en ce que** chaque élément élastique (6) est appliqué à l'aide d'au moins un moyen de fixation (9) sur une surface de roulement (14) creusée pour le corps de blocage (10) dans la bague interne (1).

8. Dispositif de serrage selon la revendication 1 ou 7, **caractérisé en ce que** chaque élément élastique (6) est un ressort du type lame métallique en forme de bande qui est plat dans son état non monté.

9. Dispositif de serrage selon l'une quelconque des revendications précédentes, **caractérisé en ce que** l'enveloppe (7) est un mandrin de bobinage.

10. Arbre entraîné pourvu d'une enveloppe (7) de carton ou de matière plastique pouvant coulisser sur l'arbre entraîné, et accouplé au côté interne de l'enveloppe au moyen d'au moins un dispositif de serrage (100) selon l'une quelconque des revendications précédentes.
